Europäisches Patentamt

European Patent Office

Office européen des brevets

(11) Veröffentlichungsnummer: **0 381 223**
**A2**

## (12) EUROPÄISCHE PATENTANMELDUNG

(21) Anmeldenummer: **90102038.8**

(22) Anmeldetag: **02.02.90**

(51) Int. Cl.5: **B29C 45/36**

(30) Priorität: **02.02.89 DE 3903032**

(43) Veröffentlichungstag der Anmeldung:
**08.08.90 Patentblatt 90/32**

(84) Benannte Vertragsstaaten:
**AT BE CH DE DK ES FR GB IT LI LU NL SE**

(71) Anmelder: **Friedrich Theysohn GmbH**
**John-F.-Kennedy-Strasse 48**
**D-3320 Salzgitter 1(DE)**

(72) Erfinder: **Pichler, Ernst**
**Lippertweg 7**
**D-3000 Hannover 21(DE)**

(74) Vertreter: **Döring, Roger, Dipl.-Ing.**
**Weidenkamp 2**
**D-3012 Langenhagen(DE)**

(54) **Verfahren zum Spritzgiessen eines kastenförmigen Behälters.**

(57) Es werden ein Verfahren und eine Vorrichtung zum Spritzgießen eines kastenförmigen Behälters aus Kunststoff angegeben, in dessen Wandung senkrecht zu seiner Standfläche verlaufende Hohlräume angebracht sind. Zur Formung der Hohlräume sind in der Vorrichtung langgestreckte Holme (9) angebracht, die zur Stabilisierung ihrer Lage durch in ihrer Längsrichtung bewegbare Stifte (11) abgestützt werden. Damit im fertigen Behälter keine Löcher vorhanden sind, werden die Stifte (11) während des Spritzvorgangs nach Maßgabe des in ihrem Bereich anstehenden, sich in Abhängigkeit vom Füllstand des Kunststoffs ändernden Spritzdrucks so weit von den Holmen (9) weggezogen, bis ihre Stirnfläche mit der Oberfläche des Teils der Vorrichtung, aus der sie herausragen, fluchtet.

Fig.6

EP 0 381 223 A2

Die Erfindung bezieht sich auf ein Verfahren zum Spritzgießen eines kastenförmigen Behälters aus Kunststoff, in dessen Wandung senkrecht zu seiner Standfläche verlaufende Hohlräume angebracht sind, unter Verwendung eines Werkzeugs, das aus einem Kern und einer Außenform, die relativ zueinander bewegbar sind, sowie aus der Formung der Hohlräume dienenden langgestreckten Holmen besteht, die mit einem axialen Ende am Werkzeug befestigt sind und die bei geschlossenem Werkzeug mittels aus dessen Oberfläche herausragender, in ihrer Längsrichtung bewegbarer Stifte in ihrem Verlauf mindestens an einer Stelle abgestützt werden sowie auf eine Vorrichtung zur Durchführung des Verfahrens (DE-GM 77 31 518).

Mit einem solchen Verfahren und der zugehörigen Vorrichtung hergestellte Behälter werden beispielsweise als Transportkästen für Flaschen, Dosen, Tüten oder ähnliche Gegenstände verwendet. Die Behälter müssen einerseits stabil genug sein, um auch schwerere Gegenstände aufnehmen zu können. Andererseits sollen sie leicht sein, damit sie selbst zum Gesamt gewicht eines gefüllten Behälters möglichst wenig beitragen. Es ist daher bekannt, solche Behälter beispielsweise doppelwandig auszubilden, wobei zwischen den durch Stege verbundenen dünnen Teilwänden Hohlräume eingeschlossen sind. Derartige Wandungen mit zwei Teilwänden sind bei geringerem Materialaufwand mechanisch stabiler als einteilige Wände. Die Kästen werden auf diese Weise durch den Einschluß der Hohlräume insgesamt leichter. Es sind auch Behälter mit nur einer, relativ dünnen Wand bekannt, die an Ecken und auch im Verlauf ihrer Wände senkrecht zur Standfläche verlaufende Hohlräume aufweisen, die den Behältern die erforderliche Stabilität geben.

Die aus Kunststoff bestehenden Behälter werden durch Spritzgießen hergestellt. Um auch die Hohlräume zwischen zwei Teilwänden oder bei einwandigen Behältern herstellen zu können, sind Zwischenkerne erforderlich, die im Sprachgebrauch als "Holme" bezeichnet werden. Diese Holme sind mit ihrem einen axialen Ende in der Regel an der Außenform befestigt. Sie verlaufen unter Abstand im wesentlichen parallel zur Wandung der Außenform. Die einseitige Einspannung der Holme reicht in den meisten Fällen nicht aus, um ein Verbiegen derselben unter Einwirkung des Spritzdrucks zu vermeiden. Das macht sich umso störender bemerkbar, je langer die Holme sind. Da die die Hohlräume umgebenden Wände aus den geschilderten Gründen dünn sind, führt das Verbiegen der Holme zu unbrauchbaren Behältern.

Durch das eingangs erwähnte DE-GM 77 31 518 sind ein Verfahren und eine Vorrichtung bekannt geworden, mit denen die Holme während des Spritzgießens in ihrem Verlauf zusätzlich abgestützt werden. Es werden dazu in ihrer Längsrichtung bewegbare Stifte verwendet, die während des Spritzgießens aus der Oberfläche der Außenform des Werkzeugs herausragen und mit ihren Stirnflächen an den Holmen anliegen. Die Holme können daher durch den mit hohem Druck eingespritzten Kunststoff nicht mehr ausgelenkt werden. Die die Hohlräume umgebenden Wände der Behälter können durch den Einsatz der Stifte maßgenau gespritzt werden. Die Stifte hinterlassen aber im fertigen Behälter Löcher in den die Hohlräume umgebenden Wänden. Das macht sich besonders dann optisch störend bemerkbar, wenn diese Löcher im fertigen Behälter außen sichtbar sind. Sie führen aber auch zu einer verminderten Stabilität der betroffenen Wände. Wenn derartige Behälter gestapelt werden, kann es daher leicht zu Verwerfungen, im Extremfall sogar zum Bruch der Wände kommen.

Der Erfindung liegt die Aufgabe zugrunde, ein Verfahren mit zugehöriger Vorrichtung anzugeben, mit dem Behälter, die in ihren Wandungen senkrecht zu ihrer Standfläche verlaufende Hohlräume haben, auf einfache Weise maßgenau durch Spritzgießen hergestellt werden können, bei dem die Stabilität der die Hohlräume umgebenden Wände nicht durch Löcher beeinträchtigt ist.

Diese Aufgabe wird mit einem Verfahren der eingangs geschilderten Art gemäß der Erfindung dadurch gelöst, daß die Stifte während des Spritzvorgangs nach Maßgabe des in ihrem Bereich anstehenden, sich in Abhängigkeit vom Füllstand des Kunststoffs im Werkzeug ändernden Spritzdrucks so weit von den Holmen weggezogen werden, bis ihre Stirnfläche mit der Oberfläche des Werkzeugs, aus der sie herausragen, fluchtet.

Bei diesem Verfahren und der zugehörigen Vorrichtung werden die für die Bildung der Hohlräume erforderlichen Holme nach wie vor während des Spritzgießens durch die Stifte abgestützt. Die Hohlräume bzw. deren Wände werden also maßgenau hergestellt. Die Stifte werden jetzt aber in Abhängigkeit vom Spritzdruck des in das Werkzeug ein gespritzten Kunststoffs von den Holmen weg so weit aus dem Werkzeug herausgezogen, bis ihre Stirnfläche beispielsweise mit der inneren Oberfläche der Außenform fluchtet. Die Stützung der Holme wird dabei erst aufgehoben, wenn bis zu der Stelle, an der der jeweilige Stift am Holm anliegt, bereits Kunststoff vorgedrungen ist, so daß der auf den Holm einwirkende Spritzdruck vermindert ist. Der Holm kann dann auch ohne Unterstützung durch den jeweiligen Stift nicht aus seiner vorgegebenen Lage auswandern. Die zurückgezogenen Stifte fluchten mit der Oberfläche des Werkzeugs, so daß diese Oberfläche eine ununterbrochene fläche ist. In den Wandungen der fertigen Behälter sind daher keine Löcher mehr vorhanden.

Die die Hohlräume umgebenden Wände sind dementsprechend stabil.

Vorteilhafte Ausgestaltungen der Erfindung gehen aus den Unteransprüchen hervor.

Verfahren und Vorrichtung nach der Erfindung werden an Hand der Zeichnungen in Ausführungsbeispielen erläutert.

Es zeigen:

Fig. 1 in perspektivischer Ansicht einen mit dem Verfahren nach der Erfindung herstellbaren Behälter.

Fig. 2 einen Schnitt durch Fig. 1 längs der Linie II - II in vergrößerter Darstellung.

Fig. 3 und 4 unterschiedliche Ansichten der Vorrichtung nach der Erfindung.

Fig. 5 und 6 Einzelheiten der Vorrichtung in vergrößerter Darstellung.

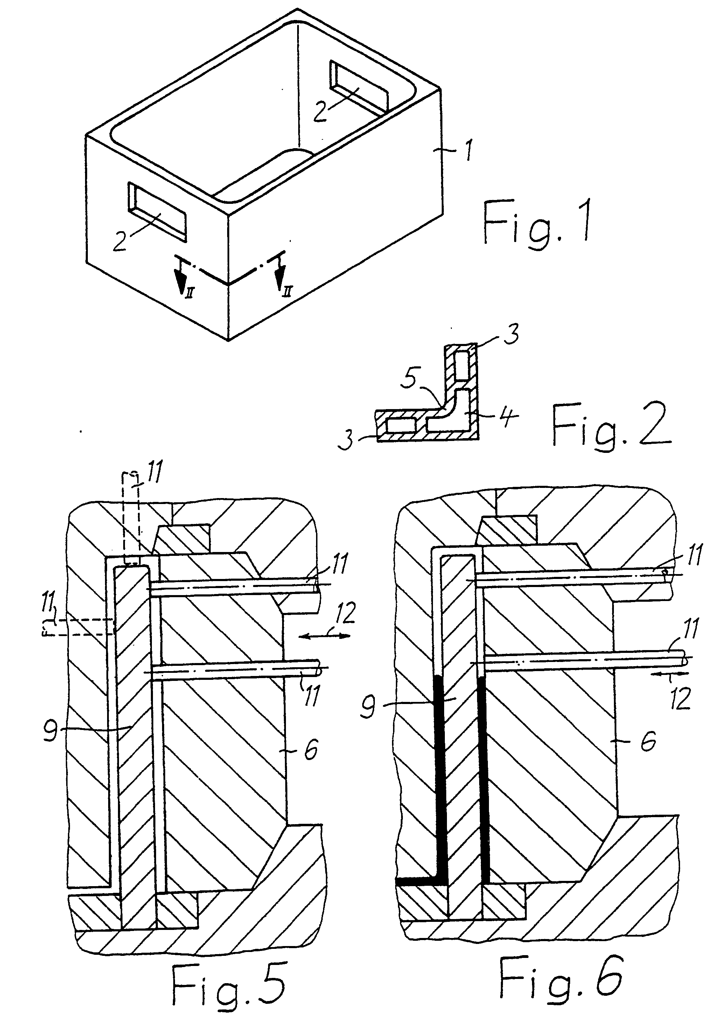

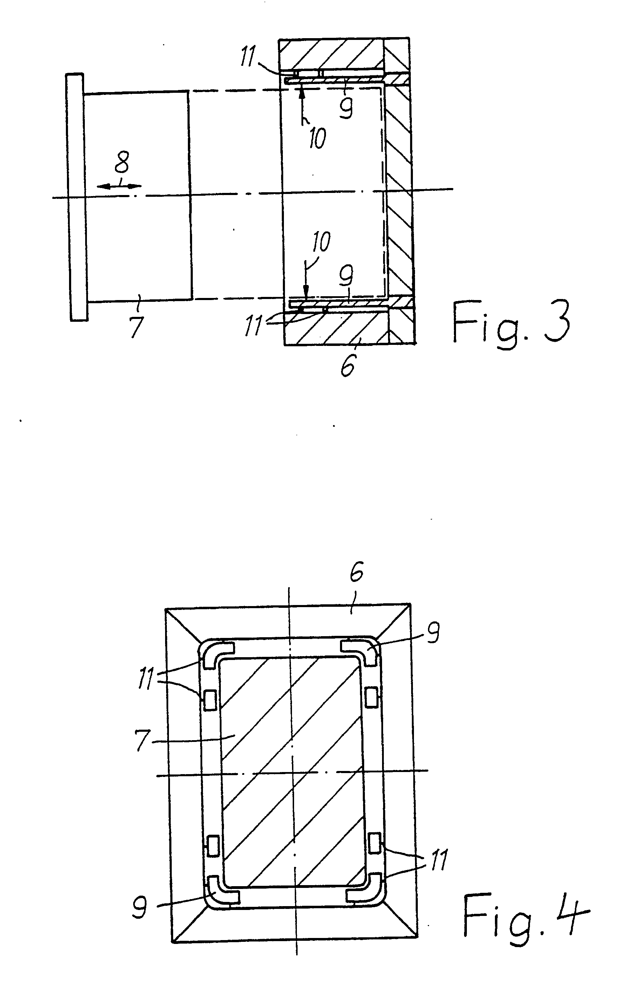

Der in Fig. 1 dargestellte Behälter 1 ist beispielsweise ein Flaschenkasten. Er ist rechteckig ausgeführt und hat in zwei Wandungen Durchbrechungen 2, die als Grifflöcher zum Tragen des Behälters 1 dienen. Die Wandungen 3 des aus Kunststoff bestehenden Behälters 1 sind einteilig ausgeführt. Zur Stabilisierung der Wandungen 3 sind in ihrem Verlauf Hohlräume 4 angebracht, die senkrecht zur Standfläche des Behälters 1 verlaufen und rundum von Kunststoff umgeben sind. Der Behälter 1 kann auch eine vom Rechteck abweichende geometrische Gestalt haben.

Der in Fig. 1 dargestellte Behälter 1 hat beispielsweise in jeder Ecke einen Hohlraum 4, so wie er aus Fig. 2 hervorgeht. Der Hohlraum 4 ist rundum von Wänden 5 umgeben, die dünner sein können als die Wandungen 3 des Behälters 1. Zur Herstellung des Behälters 1 und zur Erzeugung der Hohlräume 4 kann ein Werkzeug verwendet werden, wie es beispielsweise aus den Fig. 3 bis 6 hervorgeht.

Das Werkzeug zum Spritzgießen eines Behälters 1 besteht aus einer Außenform 6, in welche ein Kern 7 eingefahren werden kann, der in Richtung des Doppelpfeils 8 verschiebbar ist. Der Kern 7 ist in Fig. 3 innerhalb der Außenform 6 gestrichelt eingezeichnet. Zwischen dem Kern 7 und der Außenform 6 sind Holme 9 angeordnet, welche parallel zur Wandung der Außenform 6 verlaufen und beispielsweise in derselben befestigt sein können. Damit die Holme 9, welche relativ dünn im Verhältnis zu ihrer Länge sind, beim Spritzgießen des Behälters 1 durch den Spritzdruck des in das Werkzeug eindringenden Kunststoffs nicht beispielsweise in Richtung der Pfeile 10 nach außen weggedrückt werden, sind in ihrer Achsrichtung verstellbare Stifte 11 im Werkzeug angebracht, welche im dargestellten Ausführungsbeispiel aus der Oberfläche der Außenform 6 herausragen und in ihrer Arbeitsstellung mit ihren Stirnflächen an den Holmen 9 anliegen. Die Holme 9 sind dadurch so abgestützt, daß sie nicht in Richtung auf die Wandung der Außenform 6 ausgelenkt werden können. Zusätzlich können auch im Kern 7 verstellbare Stifte 11 angebracht sein, so daß die Holme 9 dann auch nicht in Richtung auf den Kern 7 zu verbogen werden können. Auch die Stirnseiten der Holme 9 könnten durch verstellbare Stifte 11 abgestützt werden. Beide Varianten sind in Fig. 5 gestrichelt eingezeichnet. Für die folgende Beschreibung wird die dargestellte Ausführungsform erläutert, bei der die Stifte 11 bewegbar in der Außenform 6 geführt sind.

Wenn nicht nur in den Eckbereichen des Behälters 1, sondern auch in Verlauf seiner Wandungen 3 Hohlräume angebracht werden sollen, dann werden in den entsprechenden Teilen des Werkzeugs weitere Holme 9 angeordnet, so wie sie aus Fig. 4 hervorgehen. Auch diese Holme 9 werden durch Stifte 11 abgestützt. In den Fig. 3, 5 und 6 sind zwei Stifte 11 pro Holm 9 eingezeichnet. Es muß mindestens ein Stift 11 vorhanden sein. Es können aber auch mehr als zwei Stifte 11 pro Holm 9 verwendet werden.

Beim Spritzen eines Behälters 1 wird beispielsweise wie folgt vorgegangen;

Das in Fig. 3 dargestellte Werkzeug wird geschlossen, so daß der Kern 7 die gestrichelt eingezeichnete Position einnimmt. Die in Richtung der Doppelpfeile 12 verstellbaren Stifte 11 liegen mit ihren Stirnflächen an den Holmen 9 an. Der zwischen Außenform 6 und Kern 7 vorhandene Spritzraum wird dann mit Kunststoff gefüllt, der unter Druck in das Werkzeug eingespritzt wird. Der Kunststoff dringt dabei in der Regel von unten her in das Werkzeug ein. Er steigt solange im Werkzeug auf, bis der ganze Spritzraum gefüllt ist.

Während des Spritzgießens liegen die Stifte 11 an den Holmen 9 an. An den Stellen, bis zu denen der Kunststoff im Spritzraum vorgedrungen ist, vermindert sich der Spritzdruck. Dadurch werden auch die Kräfte kleiner, die auf die Holme 9 einwirken, so daß die Abstützung durch die Stifte 11 nicht mehr erforderlich ist. Mit fortschreitender Füllung des Spritzraums können also die Stifte 11 von den Holmen 9 weggezogen werden. Das ist in Fig. 6 für den unteren Stift 11 eingezeichnet. Er ist so weit zurückgezogen, daß seine Stirnfläche mit der inneren Oberfläche der Außenform 6 fluchtet, so daß dieselbe eine ununterbrochene Fläche darstellt. Die entsprechende Wandung des so hergestellten Behälters 1 weist daher kein Loch auf. Sie ist vielmehr ohne Unterbrechung ausgeführt. Wenn auf der Stirnfläche der Stifte 11 Merkmale angebracht sind, beispielsweise ein Kennzeichen der Herstellerfirma, dann werden dieselben durch die zurückgezogenen Stifte 11 in die Oberfläche des Behälters 1 eingeprägt.

Die Stifte 11 können prinzipiell von Hand, mechanisch, hydraulisch oder pneumatisch bewegt werden. In bevorzugter Ausführungsform wird für die Verstellung der Stifte aber ein Elektromotor eingesetzt. Der Zeitpunkt, an dem die Stifte 11 von den Holmen 9 weggezogen werden, hängt vom Spritzdruck ab, der im Werkzeug während des Spritzgießens gemessen werden kann. Wenn der Spritzdruck an der Stelle, an welcher ein Stift 11 angeordnet ist, einen vorgegebenen Wert unterschreitet, kann der entsprechende Stift 11 in die Außenform 6 zurückgezogen werden, bis seine Stirnfläche mit der inneren Oberfläche der Außenform 6 fluchtet.

Der ganze Vorgang kann aber auch automatisiert werden. Es ist dazu möglich, den sich beim Spritzgießen in Abhängigkeit von Füllgrad des Kunststoffs im Werkzeug ändernden Spritzdruck in einem Eichvorgang zeitabhängig aufzuzeichnen. Die entsprechenden Werte können auch einem Rechner aufgegeben werden. In diesem Fall werden die Stifte 11 nach einer vorgegebenen Zeit, die vom Beginn des Spritzvorgangs an zählt, von den Holmen 9 weggezogen.

Die Stifte 11 können auch ohne Einsatz eines Rechners zeitabhängig von den Holmen 9 weggezogen werden, nämlich nach einer empirisch ermittelten oder aus vorangehenden Spritzvorgängen bekannten Zeitspanne, die vom Beginn des Spritzvorgangs gerechnet verstrichen ist.

**Ansprüche**

1. Verfahren zum Spritzgießen eines kastenförmigen Behälters aus Kunststoff, in dessen Wandung senkrecht zu seiner Standfläche verlaufende Hohlräume angebracht sind, unter Verwendung eines Werkzeugs, das aus einem Kern und einer Außenform, die relativ zueinander bewegbar sind, sowie aus der Formung der Hohlräume dienenden langgestreckten Holmen besteht, die mit einem axialen Ende am Werkzeug befestigt sind und die bei geschlossenem Werkzeug mittels aus dessen Oberfläche herausragender, in ihrer Längsrichtung bewegbarer Stifte in ihrem Verlauf mindestens an einer Stelle abgestützt werden, dadurch gekennzeichnet, daß die Stifte (11) während des Spritzvorgangs nach Maßgabe des in ihrem Bereich anstehenden, sich in Abhängigkeit vom Füllstand des Kunststoffs im Werkzeug ändernden Spritzdrucks so weit von den Holmen (9) weggezogen werden, bis ihre Stirnfläche mit der Oberfläche des Werkzeugs, aus der sie herausragen, fluchtet.

2. Verfahren nach Anspruch 1, dadurch gekennzeichnet, daß der sich beim Spritzen des Behälters (1) im Werkzeug ändernde Spritzdruck gemessen wird und daß die Stifte (11) beim Erreichen eines vorgegebenen Wertes des Spritzdrucks von den Holmen (9) weggezogen werden.

3. Verfahren nach Anspruch 1, dadurch gekennzeichnet, daß der Füllstand des Kunststoffs im Werkzeug in einem Eichvorgang in Anhängigkeit von der Zeit aufgezeichnet wird, die ab Beginn des Spritzvorgangs abgelaufen ist.

4. Verfahren nach Anspruch 3, dadurch gekennzeichnet, daß die Aufzeichnung einem Rechner aufgegeben wird.

5. Verfahren nach Anspruch 1, dadurch gekennzeichnet, daß die Stifte (11) nach Maßgabe einer vorgegebenen Zeit, die vom Beginn des Spritzvorgangs gerechnet abgelaufen ist, von den Holmen (9) weggezogen werden.

6. Verfahren nach einem der Ansprüche 1 bis 5, dadurch gekennzeichnet, daß die Stifte (11) automatisch verstellt werden, insbesondere durch einen Elektromotor.

7. Vorrichtung zur Durchführung des Verfahrens nach einem der Ansprüche 1 bis 6, dadurch gekennzeichnet, daß die Stifte (11) in der Außenform (6) angeordnet sind.

8. Vorrichtung nach Anspruch 7, dadurch gekennzeichnet, daß auch im Kern (7) Stifte (11) angebracht sind.

9. Vorrichtung nach Anspruch 7 oder 8, dadurch gekennzeichnet, daß auf der Stirnfläche mindestens eines der Stifte (11) ein Kennzeichen angebracht ist.

Fig. 1

Fig. 2

Fig. 5

Fig. 6

THY 89 - A

Fig. 3

Fig. 4

THY 89 - A